(19) Europäisches Patentamt
European Patent Office
Office européen des brevets

(11) EP 3 544 444 B1

(12) # FASCICULE DE BREVET EUROPEEN

(45) Date de publication et mention de la délivrance du brevet:
**01.01.2025 Bulletin 2025/01**

(21) Numéro de dépôt: **17812025.9**

(22) Date de dépôt: **24.11.2017**

(51) Classification Internationale des Brevets (IPC):
***A23C 9/154*** *(2006.01)* ***A23L 29/219*** *(2016.01)*
***A23L 29/30*** *(2016.01)* ***A23C 9/137*** *(2006.01)*
***A23C 15/16*** *(2006.01)* ***A23C 19/09*** *(2006.01)*
***A23D 7/015*** *(2006.01)* ***A23G 9/34*** *(2006.01)*

(52) Classification Coopérative des Brevets (CPC):
**A23C 9/1544; A23C 9/137; A23C 9/154; A23C 15/16; A23C 19/0904; A23D 7/015; A23G 9/34; A23L 29/219; A23L 29/35**

(86) Numéro de dépôt international:
**PCT/FR2017/053255**

(87) Numéro de publication internationale:
**WO 2018/096297 (31.05.2018 Gazette 2018/22)**

(54) **UTILISATION D'UNE COMBINAISON DE DEXTRINES BLANCHES ET D'AMIDONS RETICULES PHOSPHATE HYDROXYPROPYLES COMME SUBSTITUT DE MATIERE GRASSE**

VERWENDUNG EINER KOMBINATION VON WEISSEN DEXTRINEN UND VERNETZTER PHOSPHAT HYDROXYPROPYL STÄRKE AS FETT-ERSATZ

USE OF A COMBINATION OF WHITE DEXTRINES AND CROSSLINKED PHOSPHATE HYDROXYPROPYL STARCHES AS FAT SUBSTITUTE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2016 FR 1661469**

(43) Date de publication de la demande:
**02.10.2019 Bulletin 2019/40**

(73) Titulaire: **Roquette Frères**
**62136 Lestrem (FR)**

(72) Inventeur: **MORETTI, Emmanuelle**
**59800 Lille (FR)**

(74) Mandataire: **Plasseraud IP**
**104 Rue de Richelieu**
**CS92104**
**75080 Paris Cedex 02 (FR)**

(56) Documents cités:
**EP-A2- 0 672 350** **EP-A2- 0 864 255**
**US-A- 4 510 166** **US-A- 5 512 311**

- **ANONYMOUS: "Dextrin Handling/Processing", 1 January 2011 (2011-01-01), XP055742145, Retrieved from the Internet <URL:https://www.ams.usda.gov/sites/default/files/media/Dextrin%202010%20TR.pdf> [retrieved on 20201020]**
- **DATABASE GNPD [online] MINTEL; July 2004 (2004-07-01), PROCORDIA FOOD: "Lätt Caesar Dressing med Parmesan Salad Dressing", XP002771617, Database accession no. 287500**
- **DATABASE GNPD [online] MINTEL; October 2007 (2007-10-01), NESTLÉ: "Vanilla Flavoured Rice Custard", XP002771618, Database accession no. 789654**
- **DATABASE GNPD [online] MINTEL; May 2001 (2001-05-01), YOPLAIT: "Le Rice Dairy Snack", XP002771619, Database accession no. 96491**
- **DATABASE GNPD [online] MINTEL; September 2007 (2007-09-01), STRAUSS DAIRIES: "4,5% Fat Chocolate Mousse", XP002771620, Database accession no. 776373**
- **DATABASE GNPD [online] MINTEL; July 2009 (2009-07-01), RUOKAKESKO: "Lactose-Free Vegetable Fat Blend", XP002771621, Database accession no. 1131888**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 544 444 B1



(Cont. page suivante)

• DATABASE GNPD [online] MINTEL; October 2008 (2008-10-01), REGAL CREAM PRODUCTS: "Frozen Gourmet Yogurt", XP002771622, Database accession no. 991988

## Description

### DOMAINE TECHNIQUE DE L'INVENTION

La présente invention concerne l'utilisation d'une combinaison de dextrines et de dérivés d'amidon comme substitut de matières grasses dans divers produits laitiers frais.

Plus particulièrement, cette combinaison d'ingrédients peut être avantageusement utilisée en tant que substitut de matière grasse dans les produits laitiers frais tels que crème dessert, produits fermentés, boissons laitières, beurre, crème glacées, sauce fromagère etc., plus particulièrement dans les crèmes desserts.

### CONTEXTE DE L'INVENTION

Depuis toujours, les amidons sont utilisés dans l'industrie alimentaire, non seulement comme ingrédient nutritif mais également comme agent épaississant, liant, stabilisant ou gélifiant.

Au cours des dernières années, les fabricants de produits alimentaires ont travaillé à développer des technologies de réduction de la teneur en lipides et en calories des aliments transformés.

La genèse du choix de ces technologies est la prise de conscience croissante des consommateurs de la valeur nutritive et de la teneur en calories des aliments, et le désir accru desdits consommateurs de réduire la teneur globale en matières grasses de leur régime alimentaire, ainsi que de réduire ou maintenir leur poids corporel par la sélection d'aliments à faible teneur en gras.

Étant donné que l'amidon a une teneur calorique de seulement 4 Kcal/g alors que les lipides ont une teneur calorique de l'ordre de 9 kcallg, les efforts de recherche ont été dirigés vers la modification des propriétés fonctionnelles et organoleptiques de l'amidon de telle sorte que l'amidon modifié puisse être utilisé comme un substitut lipidique alimentaire efficace.

Dans l'état de l'art, deux stratégies de modification de l'amidon ont été ainsi mises en oeuvre :

- la conversion acide ou enzymatique de l'amidon en dextrines de faible DE,
- la modification chimique de l'amidon, conduisant à des formes stabilisées par réaction des groupes hydroxyles de l'amidon avec des agents monofonctionnels pour introduire des groupes de substitution. Il s'agit d'amidons tels que l'acétate d'amidon, les monophosphates et les éthers d'hydroxypropyle.

Dans le domaine des dérivés d'amidon obtenus par conversion acide ou enzymatique de l'amidon utilisés comme substitut de matière grasse, on peut faire référence aux brevets suivants :

- US 4,510,166 qui décrit des amidons convertis pour une utilisation en remplacement de matières grasses. Ces amidons sont transformés en un DE inférieur à 5 et ont une certaine viscosité d'écoulement à chaud, ainsi qu'une résistance de gel minimum lorsqu'ils sont dispersés dans l'eau à 10 à 50% de matière sèche :

    - US 5 512 311 décrit des amidons non-gélifiants convertis pour une utilisation en remplacement de matières grasses. Ces amidons sont de préférence transformés à un DE inférieur à 5 et un degré de substitution d'environs 0,12 à 0,70;

- US 3,962,465 qui décrit des procédés pour le traitement de l'amidon avec des enzymes de manière à transformer l'amidon et de préparer un hydrolysat d'amidon pour une utilisation dans les aliments. L'hydrolysat présente un DE de 5 à 10 et forme un gel lorsqu'il est dispersé dans l'eau, cuit et refroidi ;
- US 3.986.890 qui décrit des dextrines qui peuvent être utilisées avec succès en tant que substituts de matières grasses dans des produits surgelés tels que la crème glacée ou des produits qui nécessitent de fusion tels que la margarine. Lorsqu'elles sont utilisées en remplacement partiel (jusqu'à environ 50%), les gels confèrent aux produits alimentaires tels que les crèmes glacées, la margarine, les glaçages et les sauces, des propriétés organoleptiques comparables à celles de la matière grasse. Dans certains produits alimentaires, ils peuvent être utilisés avec succès en remplacement total.
- US 4,536,408, qui décrit une pâte à tartiner à faible teneur en matière grasse, préparée avec un hydrolysat d'amidon non gélifiant ayant un DE comprise entre 4 et 25. L'hydrolysat d'amidon non gélifiant peut être utilisé à une teneur de 15 à 35 % en poids de la préparation pour réduire la matière grasse de 50% dans la pâte à tartiner.

Dans le domaine des dérivés d'amidon obtenus par modification chimique de l'amidon utilisés comme substitut de matière grasse, on peut faire référence aux brevets suivants :

- US 5,110,612 qui décrit des agents de charge appropriés pour remplacer le saccharose dans les aliments. Ces agents de charge comprennent des hydrolysats de dérivés d'éthers hydroxypropyle d'amidon, caractérisés en ce qu'au moins 15% de l'hydrolysat est constitué d'un polymère d'amidon ayant un degré de polymérisation (DP) de 2 à 6. L'hydrolysat a un DE d'environ 20 à 45 ;
- US 3,369,910 qui décrit des dérivés d'éthers hydroxypropyle d'amidon qui sont utilisés pour leurs propriétés épaississantes stables dans les aliments soumis aux cycles gel / dégel et d'autres types de cycles de température (par exemple , la cuisson et le refroidissement). Ces dérivés d'amidon ont de préférence un degré de substitution (ou DS, i.e. nombre moyen de groupements hydroxyles substitués par unité d'anhydroglucose) d'environ 0,15 à 0,21 ;
- US 4,981,709 qui divulgue des aliments à teneur faible ou réduite en matières grasses, préparés avec des dérivés d'éthers hydroxypropyle d'amidon riche en amylose (amidon ayant au moins 40% d'amylose), qui sont non réticulés et qui ont un degré de substitution d'au moins 0,04.

En outre, un produit laitier allégé, type dessert au riz, comprenant en tant qu'amidons, de l'adipate de diamidon acetylé, du phosphate de diamidon hydroxypropylé et de l'amidon torréfié est connu de DATABASE GNPD MINTEL; mai 2001 (2001-05), Yoplait: "Le Rice Dairy Snack", record ID 96491.

Malgré ces nombreuses contributions faites à ce jour dans le domaine des aliments à teneur faible ou réduite en matières grasses, les fabricants alimentaires persistent dans leurs demandes d'amidons modifiés ayant des caractéristiques organoleptiques équivalentes aux témoins avec matière grasse.

La société Demanderesse a ainsi trouvé que ce besoin récurent pouvait être satisfait par une combinaison particulière de certaines dextrines avec des amidons chimiquement modifiés.

## RESUME DE L'INVENTION

La présente invention concerne l'utilisation d'une composition contenant un amidon réticulé phosphate hydroxypropylé et une dextrine blanche pour la fabrication de produits laitiers frais à teneur réduite en matière grasse, caractérisée en ce que :

- l'amidon réticulé phosphate hydroxypropylé présente un degré de substitution compris entre 0,09 à 0,2, de préférence compris entre 0,09 et 0,14, plus préférentiellement encore d'environ 0,10 à 0,11,
- la dextrine blanche présente :

  o un DE inférieur à 5, de préférence inférieur à 3, plus préférentiellement inférieur à 2,
  o une viscosité à 40 % de matière sèche comprise entre 3600 et 6000 mPa.s, et
  o une teneur en solubles inférieure à 30 %, et en ce que

  - l'amidon réticulé phosphate hydroxypropylé est incorporé dans le produit laitier frais à une teneur comprise entre 0,4 et 5 % en poids,
  - la dextrine blanche est incorporée dans le produit laitier frais à une teneur comprise entre 0,1 et 2 % en poids.

La présente invention est également relative à une méthode de préparation d'un produit laitier frais à teneur réduite en matière grasse, caractérisée en ce qu'un amidon réticulé phosphate hydroxypropylé et une dextrine blanche sont ajoutés aux composants dudit produit laitier frais et en ce que :

- l'amidon réticulé phosphate hydroxypropylé présente un degré de substitution compris entre 0,09 à 0,2, de préférence compris entre 0,09 et 0,14, plus préférentiellement encore d'environ 0,10 à 0,11 ;
- la dextrine blanche présente :

  o un DE inférieur à 5, de préférence inférieur à 3, plus préférentiellement inférieur à 2,
  o une viscosité à 40 % de matière sèche comprise entre 3600 et 6000 mPa.s, et
  o une teneur en solubles inférieure à 30 %, et en ce que

  - l'amidon réticulé phosphate hydroxypropylé est incorporé dans le produit laitier frais à une teneur comprise entre 0,4 et 5 % en poids,
  - la dextrine blanche est incorporée dans le produit laitier frais à une teneur comprise entre 0,1 et 2 % en poids.

De préférence, la teneur réduite en matière grasse est une réduction de 5 à 50 % en poids, de préférence de l'ordre de 50 % en poids de la teneur en matière grasse totale desdits produits laitiers frais.

Plus particulièrement, l'origine de l'amidon utilisé pour préparer l'amidon réticulé phosphate hydroxypropylé et la

dextrine blanche est choisie parmi le maïs, la pomme de terre, la patate douce, le blé, le riz, le sagou, le tapioca, le maïs, le riz, le pois, le quinoa, le sorgho et est plus particulièrement :

- le maïs waxy, pour la préparation de l'amidon réticulé phosphate hydroxypropylé,
- le pois, pour la préparation de la dextrine blanche.

Par ailleurs,

- l'amidon réticulé phosphate hydroxypropylé est incorporé dans le produit laitier à une teneur comprise de préférence entre 1,5 et 5 % en poids, plus préférentiellement encore de l'ordre d'environ 3,7 % en poids,
- la dextrine blanche est incorporée dans le produit laitier à une teneur comprise de préférence entre 0,3 et 0,5 % en poids, plus préférentiellement encore de l'ordre d'environ 0,4 % en poids.

Plus particulièrement, cette combinaison d'ingrédients peut être avantageusement utilisée en tant que substitut de matière grasse dans les produits laitiers frais choisis parmi les crèmes desserts, les produits fermentés, les boissons laitières, le beurre, les crèmes glacées, et les sauces fromagères, et plus particulièrement les crèmes desserts.

Cette composition comprenant de l'amidon réticulé phosphate hydroxypropylé et de la dextrine blanche sera ainsi utilisée dans des préparations de produits laitiers dont la teneur en matière grasse a été réduite de 5 à 50 % en poids, de préférence de l'ordre de 50 % en poids.

## DESCRIPTION DETAILLEE DE L'INVENTION

### *Définition du domaine technique*

Par leurs multiples propriétés physico-chimiques, l'amidon et ses dérivés présentent une large panoplie d'applications alimentaires, dans lesquelles, en plus de leurs valeurs nutritives propres aux glucides, les amidons exercent une grande influence sur la viscosité et la texture.

De nos jours, les consommateurs veulent consommer des produits de grande qualité nutritionnelle (appauvris en sucre, en gras, etc...) tout en gardant les mêmes propriétés sensorielles.

Sur le marché des desserts lactés, il a été montré que la texture joue sur les préférences alimentaires et que le crémeux est un élément clé guidant les goûts et choix des consommateurs.

L'amidon est le principal polysaccharide de réserve des végétaux supérieurs, biosynthétisé sous forme de grains, dont la taille, la forme et le ratio amyloses / amylopectines dépendent de son origine botanique (pomme de terre, maïs, blé, pois etc..). Il représente une fraction pondérale importante dans de nombreuses matières premières agricoles comme les céréales (30% à 70%), les tubercules (60% à 90%) et les légumineuses (25% à 50%).

Les amidons natifs correspondent au produit brut, extrait sans modification de structure moléculaire. Ce sont des nutriments abondants, renouvelables, peu coûteux, qui, après cuisson, trouvent dans les aliments de multiples fonctions comme épaississant, gélifiant, liant ou encore sucrant, mais leur utilisation en industrie alimentaire reste limitée.

En effet, l'amidon natif présente de nombreux inconvénients comme la formation d'un gel opaque, une mauvaise résistance aux traitements thermiques élevés, aux cisaillements et à l'acidité et une mauvaise stabilité de texture dans le temps due à la rétrogradation (formation de structures semi-cristallines à partir de l'amylose lors du refroidissement).

L'emploi des amidons natifs est réservé à des produits soumis à des cuissons et à des traitements technologiques modérés et consommés rapidement après leur préparation. Les amidons natifs les plus utilisés sont la fécule de pomme de terre et l'amidon de maïs.

Afin de pallier aux inconvénients précédemment cités, les amidons peuvent subir des modifications physiques et/ou chimiques et ainsi être adaptés aux besoins des industriels de l'alimentation via les exigences des consommateurs.

Dans les crèmes desserts, l'amidon de maïs est utilisé et celui-ci a besoin d'être réticulé et stabilisé pour un résultat optimal.

La réticulation correspond à l'introduction de liaisons inter et intramoléculaires permettant une meilleure résistance aux températures élevées, à l'acidité et aux cisaillements.

En revanche, plus un amidon est réticulé, plus sa capacité de gonflement et donc sa viscosité diminuent. La réticulation est réalisée par ajout d'agents de réticulation tels que le phosphate ou l'adipate.

La stabilisation est quant à elle une modification chimique se traduisant par le greffage de groupements acétate ou hydroxypropyle sur les molécules de l'amidon. Elle permet d'éviter les réassociations de ces molécules après cuisson et ainsi, de minimiser les phénomènes liés à la rétrogradation, c'est-à-dire l'augmentation de viscosité au refroidissement jusqu'à gélification ou encore la synérèse.

De plus, la température de gélification, température à laquelle le maximum de viscosité est atteint, est abaissée.

La crème dessert est un produit largement consommé en Europe, connue sous le nom de « Natillas » en

Espagne, « Vla » aux Pays-Bas ou encore « Custards » en Angleterre. Les crèmes desserts sont plébiscitées par les consommateurs pour leurs propriétés sensorielles mais aussi pour leurs qualités nutritives.

En recherche, ce produit est communément pris comme modèle de matrice semi-solide pour sa structure simple et son faible nombre d'ingrédients.

Une crème dessert peut être définie comme une suspension de particules déformables (les granules d'amidon gonflés) dispersées dans un milieu homogène contenant des protéines de lait ainsi que des hydrocolloïdes tels que des carraghénanes, des gommes de guar ou de xanthane.

En pratique, la recette type d'une crème dessert se compose :

- de lait (> 80 % en poids),
- de sucre (8-12 % en poids),
- d'amidon modifié (2-4 % en poids),
- de carraghénane, de gomme de guar ou de xanthane (0,01 - 1 % en poids),
- d'arôme et si besoin,
- de colorants.

Le processus de fabrication suit quatre grandes étapes :

- le mélange de poudres (amidon modifié, sucre, carraghénanes) / lait est chauffé à 55°C puis
- homogénéisé entre 0 et 200 bar, de préférence 50 bar,
- avant d'être stérilisé à 135°C pendant 55 secondes (ou par traitement UHT);
- le conditionnement entre 10 et 20°C (parfois < 10°C) et le stockage à 4°C. En rhéologie, une crème dessert est un fluide rhéofluidifiant pour lequel la viscosité

apparente $\eta_a$ diminue quand la vitesse de cisaillement $\dot{\gamma}$ augmente.

Sa courbe d'écoulement est décrite par la relation d'Oswald-de Waele :

$$\eta_a = k\,\dot{\gamma}^{n-1}$$

où « n » est l'indice d'écoulement (n < 1) et « k » l'indice de consistance.

Le comportement viscoélastique d'une crème dessert est établi par des mesures en régime harmonique dont on déduit le module élastique G' et le module visqueux G" (solide viscoélastique quand G' > G" et fluide viscoélastique quand G" < G').

Ainsi le seuil d'écoulement est déterminé lorsque G' = G".

Les propriétés rhéologiques et sensorielles des crèmes desserts sont influencées par les caractéristiques particulières des différents ingrédients comme le taux de matière grasse du lait, le type et la concentration des carraghénanes et des amidons et les interactions qui en découlent.

Constituant à plus de 80% les crèmes desserts, le lait en est l'ingrédient principal.

La différence entre un lait entier et un lait écrémé porte sur la viscosité : les crèmes desserts contenant du lait entier sont plus visqueuses et perçues plus épaisses, plus grasses et plus crémeuses en sensoriel.

En ce qui concerne les hydrocolloïdes, il est d'usage d'employer les carraghénanes-kappa, iota ou lambda, les gommes de guar ou de xanthane comme agents texturants. En effet, en présence de lait, les carraghénanes sont absorbés par les micelles de caséines qui voient leurs tailles augmenter et ainsi former un réseau gélifié.

L'augmentation du taux de carraghénanes fait augmenter la viscosité et les modules visqueux et élastique en rhéologie ainsi que l'épaisseur et le crémeux en analyse sensorielle.

Les matrices contenant des carraghénanes-lambda sont perçues plus sucrées, plus « creamy » (crémeux) et plus « smooth » (moelleux) que celles avec des carraghénanes-kappa.

Quant à l'utilisation des amidons modifiés, elle est de plus en plus fréquente due à leur plus grande résistance thermique et leur plus grande stabilité dans le temps par rapport aux amidons natifs, tout en offrant plus de texture et moins de synérèse aux produits laitiers.

Le choix de l'amidon est d'importance capitale dans le processus de fabrication des crèmes desserts.

En effet, selon leur modification, les amidons n'offrent pas les mêmes propriétés texturales : avec le même agent de réticulation, plus un amidon sera réticulé, moins il développera de viscosité et plus sa concentration dans la formulation devra être importante pour obtenir une texture équivalente.

De plus, un amidon modifié phosphate/hydroxypropyle conférera plus de viscosité à une crème dessert qu'un amidon modifié adipate/acétate et cette crème sera perçue plus « creamy », « smooth » et « fatty » (grasse).

Enfin, un grand nombre d'auteurs se sont intéressés à l'inuline HP (degré de polymérisation moyen ≥ 25) comme

ingrédient mimant la matière grasse.

Ils ont démontré que l'utilisation d'inuline dans des matrices pauvres en matière grasse donne des résultats similaires à des témoins riches en matière grasse en rhéologie comme en analyse sensorielle.

Cependant, au-delà d'une certaine concentration (6%), la viscosité diminue, ce qui est due à la compétition inuline/amidon pour l'eau, l'amidon n'ayant plus assez d'eau pour gonfler.

***Choix des ingrédients***

Afin de trouver un substitut à la matière grasse dans les crèmes desserts prises comme modèle de matrice, la société Demanderesse a testé plusieurs ingrédients (pris seuls ou en combinaison).

Elle a ainsi identifié que la combinaison d'un amidon réticulé phosphate hydroxypropylé et d'une dextrine blanche de bas DE donnait des résultats bien supérieurs dans un produit laitier frais présentant une teneur en matière grasse réduite de 50 % en poids.

Selon l'invention, l'origine de l'amidon utilisé pour préparer l'amidon réticulé phosphate hydroxypropylé et la dextrine blanche peut être dérivé de toute source, y compris le maïs, la pomme de terre, la patate douce, le blé, le riz, le sagou, le tapioca, le maïs, le riz, le pois, le quinoa, le sorgho.

L'amidon réticulé phosphate hydroxypropylé peut être préparé à partir de l'un quelconque des amidons de base ci-dessus, et plus particulièrement à partir de l'amidon de maïs cireux (amidon waxy), par tout moyen connu par ailleurs de l'homme du métier.

L'amidon réticulé phosphate hydroxypropylé est également appelé phosphate de diamidon hydroxypropylique. C'est un amidon réticulé au trimétaphosphate de sodium ou à l'oxychlorure de phosphore et éthérifié à l'oxyde de propylène. Il est défini comme E1442 et enregistré à la FDA (CFR title 21) sous le numéro 172.892. Le numéro CAS correspondant à ce produit est le 53124-00-8.

L'amidon réticulé phosphate hydroxypropylé appropriés doit présenter un degré de substitution (DS) compris entre 0,09 à 0,2, de préférence compris entre 0,09 et 0,14, plus préférentiellement encore d'environ 0,10 à 0,11, de sorte qu'il soit stable, à savoir ne se gélifie pas dans la dispersion aqueuse.

Par DS ou degré de substitution est entendu le nombre moyen de groupements hydroxyles substitués par unité d'anhydroglucose.

Par environ est entendu plus ou moins 10% de la valeur, de préférence plus ou moins 5 % de celle-ci. Par exemple, environ 100 signifie entre 90-110, de préférence entre 95-105.

Par exemple, un amidon réticulé phosphate hydroxypropylé commercialisé par la société Demanderesse sous la marque CLEARAM® CR3010 est parfaitement approprié pour une utilisation dans la présente invention.

L'amidon réticulé phosphate hydroxypropylé est incorporé dans la préparation alimentaire à une teneur comprise entre 0,4 et 5 %, de préférence entre 1,5 et 5 % en poids ou entre 3 et 5 % en poids, plus préférentiellement encore de l'ordre de 3,7% en poids

La dextrine blanche de bas DE est une dextrine de bas DE, présentant :

- o un DE (Dextrose Equivalent) inférieur à 5, de préférence inférieur à 3, plus préférentiellement inférieur à 2,
- o une viscosité à 40 % de matière sèche comprise entre 3600 et 6000 mPa.s, et
- o une teneur en solubles inférieure à 30 %.

La dextrine blanche est plus particulièrement préparée à partir d'amidon de pois, par tout moyen connu par ailleurs de l'homme du métier.

La dextrine blanche correspond au CAS No 9004-53-9.

La viscosité de la dextrine blanche est en particulier mesurée à 30°C. Plus précisément, elle peut être mesurée par la méthode décrite ci-dessous. La teneur en solubles est en particulier mesurée par la méthode décrite ci-dessous. Par exemple, une dextrine blanche de bas DE commercialisée par la société Demanderesse sous la marque TACKIDEX®B 735 est parfaitement appropriée pour une utilisation dans la présente invention.

La dextrine blanche est incorporée dans la préparation alimentaire à une teneur comprise entre 0,1 et 2 % en poids, de préférence entre 0,3 et 0,5 % en poids, plus préférentiellement encore de l'ordre d'environ 0,4 % en poids.

Pour déterminer la capacité de la combinaison selon l'invention à se substituer la matière grasse des crèmes desserts, un certain nombre d'analyse ont été réalisées par la société Demanderesse.

***Mesure de la viscosité des dextrines blanches, notamment de pois***

La mesure de la viscosité s'effectue à l'aide d'un analyseur de viscosité (Rapid Viscosimeter Analyser de type PHYSICA MCR 501 ou équivalent) dans des conditions de concentration déterminées et suivant un profil d'analyse température/temps adapté.

Profil d'analyse :

| Temps hh:mm:ss | Température °C | Vitesse de rotation Rpm |
|---|---|---|
| 00:00:00 | 90 | 160 |
| 00:02:00 | 90 | 600 |
| 00:03:00 | 90 | 160 |
| 00:03:30 | 90 | 160 |
| 00:06:30 | 30 | 160 |
| 00:12:00 | 30 | 160 |

| | |
|---|---|
| Fin de test : | 00:12:10 (hh:mm:ss) |
| Température initiale : | 90°C ± 3°C |
| Intervalle d'acquisition de données : | 4 secondes |
| Sensibilité : | basse (low) |
| Prise d'essai : | concentration de 40 %, soit 11,20 g de masse anhydre. |

*Mode opératoire:*

- introduire 11,20 g à ± 10 mg dans le bol du viscosimètre,
- introduire de l'eau déminéralisée jusqu'à l'obtention d'une masse totale égale à 28,00 ± 0,01 g,
- homogénéiser délicatement l'ensemble avec une micro-spatule et bien essuyer la micro-spatule sur l'extrémité de la pâle d'agitation,
- placer le pâle d'agitation dans le bol du viscosimètre,
- introduire le système dans la chambre de chauffage de l'instrument, l'analyse est automatiquement enregistrée.

Les variations de viscosité sont mesurées par microprocesseur en RVU. La mesure conservée est celle à 12 minutes (exprimée en mPa.s, sachant que 1 unité RVU = 12 mPa.s).

***Mesure de la teneur en solubles des dextrines blanches, notamment de pois***

La solubilisation d'un amidon dextrinifié est une indication de sa modification. La solubilisation est réalisée par la mise en solution d'une quantité connue d'échantillon de dextrine dans 200 ml d'eau distillée, filtration et la détermination des solubles est faite sur le filtrat.

*Mode opératoire:*

- introduire 5,0 g de l'échantillon à analyser dans un flacon de 300 ml et disperser avec 200 ml d'eau distillée. Boucher le flacon,
- placer au bain-marie thermostaté réglé à 22°C ± 1°C placé sur agitateur magnétique.
- mettre sous agitation pendant 5 minutes et laisser pendant 4 heures en agitant pendant 5 minutes toutes les 30 minutes,
- retirer le flacon,
- filtrer sur filtre plissé Whattman 2V (porosité 8 μm) et pipeter 50 ml de filtrat dans un cristallisoir préalablement séché et taré,
- évaporer la majeure partie de l'eau à l'étuve (infra-rouge, aérée, permettant un séchage à 50-60°C) puis 1 h 30 à l'étuve (réglée à 130°C ± 3°C),
- refroidir au dessiccateur et repeser.

La teneur en solubles exprimée en pourcentage en masse de produit tel quel est donnée par la formule :

$$\frac{(P - P') \times 200 \times 100}{50 \times m}$$

Où :

P' est la masse, en grammes, du cristallisoir vide
P est la masse, en grammes du cristallisoir après passage à l'étuve
m est la masse, en grammes, de la prise d'essai

Ainsi, la combinaison d'amidon réticulé phosphate hydroxypropylé et de dextrine blanche selon la présente invention permet de diminuer les teneurs en matières grasses de produits laitiers frais.

Le produit laitier peut être une crème dessert contenant classiquement

- du lait, de préférence du lait écrémé, en particulier en une proportion d'au moins 80% en poids ;
- du sucre, de préférence en une proportion de 8-12% en poids
- de la crème, de préférence à 35 % de matière grasse, en particulier en une proportion de 0 à 10 % en poids, de préférence entre 3 et 8% ;
- des carraghénanes, gomme de guar ou de xanthane, en particulier en une proportion de 0,01 à 1 % en poids
- un arôme, par exemple de vanille ou chocolat ; et
- facultativement un colorant.

La présente invention est relative à l'utilisation d'une combinaison de l'amidon réticulé phosphate hydroxypropylé et de la dextrine blanche selon la présente invention ou d'une composition comprenant de l'amidon réticulé phosphate hydroxypropylé et de la dextrine blanche selon la présente invention pour diminuer les teneurs en matières grasses de produits laitiers frais ou pour la préparation de produits laitiers frais présentant des teneurs en matières grasses réduites.

Par teneurs en matières grasses réduites ou diminuées, il est entendu que le produit laitier frais présente une réduction de 5 à 50 % en poids de la teneur totale en matières grasse, de préférence de 10 à 50 %, par exemple de 10 à 20, 20 à 30, 30 à 40 ou 40 à 50 % par rapport au produit laitier frais de référence. Par exemple, dans le contexte du crème dessert, la crème dessert présentant des teneurs en matières grasses réduites comprend moins de 3% en poids de matières grasses, de préférence moins de 2 %, et par exemple environ 1,5 %.

La présente invention est relative à une méthode de préparation d'un produit laitier frais à teneur réduite en matière grasse, caractérisée en ce qu'un amidon réticulé phosphate hydroxypropylé et une dextrine blanche selon la présente invention sont ajoutés aux composants dudit produit laitier frais.

De préférence, les composants dudit produit laitier frais comprennent du lait, de préférence du lait écrémé, en particulier en une proportion d'au moins 80% en poids. Ils peuvent comprendre en outre

- du sucre, de préférence en une proportion de 8-12% en poids
- de la crème, de préférence à 35 % de matière grasse, en particulier en une proportion de 0 à 10 % en poids, de préférence entre 3 et 8% ;
- des carraghénanes, gomme de guar ou de xanthane, en particulier en une proportion de 0,01 à 1 % en poids ;
- un arôme, par exemple de vanille ou chocolat ; et/ou
- facultativement un colorant.

La méthode comprend par exemple le mélange des composants dudit produit laitier frais avec l'amidon réticulé phosphate hydroxypropylé et la dextrine blanche selon la présente invention, l'homogénéisation, la stérilisation et le conditionnement.

La présente invention est en outre relative à un produit laitier frais à teneur réduite en matière grasse comprenant de l'amidon réticulé phosphate hydroxypropylé et de la dextrine blanche selon la présente invention, dans lequel

- l'amidon réticulé phosphate hydroxypropylé est présent dans le produit laitier à une teneur comprise entre 0,4 et 5 % en poids, de préférence entre 1,5 et 5 % en poids, plus préférentiellement encore de l'ordre d'environ 3,7 % en poids,
- la dextrine blanche est présente dans le produit laitier à une teneur comprise entre 0,1 et 2 % en poids, de préférence entre 0,3 et 0,5 % en poids, plus préférentiellement encore de l'ordre d'environ 0,4 % en poids.

De préférence, le produit laitier frais comprend moins de 3% en poids de matières grasses, de préférence moins de 2 %, et par exemple environ 1,5 %.

L'invention sera mieux comprise à l'aide des exemples qui suivent, lesquels se veulent illustratifs

## EXEMPLES

**Exemple 1** : **Crèmes desserts à la vanille**

Une première recette de crème dessert à la vanille selon l'invention a été préparée, où 50% de la matière grasse ont été substitués par une combinaison :

o d'une dextrine de pois (commercialisé par la société Demanderesse sous le nom de marque TACKIDEX® B 735) avec
o un dérivé d'amidon hydroxypropylé réticulé phosphate (amidon HP) (commercialisé par la société Demanderesse sous le nom de marque CLEARAM® CR3010).

En comparatif, quatre autres recettes ont été élaborées,

- Recette n°1 : recette où la substitution de matière grasse est réalisée par la combinaison :

  o de la dextrine de pois avec
  o une autre catégorie d'amidon chimiquement modifié : un amidon modifié acétylé (utilisé classiquement comme agent de texture) et commercialisé par la société Demanderesse sous le nom de marque CLEARAM® CH3010 ;

- Recette n°2 : recette où la substitution de matière grasse est réalisée par la combinaison :

  o d'un agent classiquement mis en oeuvre dans les produits laitiers comme substitut de matière grasse : l'inuline HP (Raftiline HP, Beneo-Orafti, Oreye, Belgique) (en lieu et place des dextrines), avec
  o un dérivé d'amidon hydroxypropylé réticulé phosphate (commercialisé par la société Demanderesse sous le nom de marque CLEARAM® CR3010)

- Recette n°3 : recette où la substitution de matière grasse est réalisée par la combinaison :

  o d'un agent classiquement mis en oeuvre dans les produits laitiers comme substitut de matière grasse : l'inuline, avec
  o l'amidon modifié acétylé commercialisé par la société Demanderesse sous le nom de marque CLEARAM® CH3010

- Recette n°4 : une recette riche en matières grasses, contenant le CLEARAM® CR3010 seul (sans dextrine de pois) ;
- Recette n°5 : une recette riche en matières grasses, contenant le CLEARAM® CH3010 seul (sans dextrine de pois).

| % | Essais réduite en matière grasse (MG) (1,5% de MG) | | | | Témoins riches en matières qrasses | |
|---|---|---|---|---|---|---|
| **Recette** | **selon l'invention** | **1** | **2** | **3** | **4** | **5** |
| | Dextrine de pois + amidon HP | Dextrine de pois + amidon acétylé | Inuline + Amidon HP | Inuline + amidon acétylé | 3% MG avec amidon HP | 3% MG avec amidon acétylé |
| **lait écrémé (10% Matière Sèche)** | 81,87 | 81,87 | 81,87 | 81,87 | 78,07 | 78,07 |
| **Sucre** | 9,00 | 9,00 | 9,00 | 9,00 | 9,00 | 9,00 |
| **Crème 35 % (LES FAYES)** | 4,00 | 4,00 | 4,00 | 4,00 | 8,20 | 8,20 |
| **Amidon HP CLEARAM CR3010** | 3,70 | / | 3,70 | / | 3,70 | / |

(suite)

| % | Essais réduite en matière grasse (MG) (1,5% de MG) | | | | Témoins riches en matières qrasses | |
|---|---|---|---|---|---|---|
| **Recette** | **selon l'invention** | **1** | **2** | **3** | **4** | **5** |
| | Dextrine de pois + amidon HP | Dextrine de pois + amidon acétylé | Inuline + Amidon HP | Inuline + amidon acétylé | 3% MG avec amidon HP | 3% MG avec amidon acétylé |
| **Amidon acétylé CLEARAM CH3010** | / | 3,70 | / | 3,70 | / | 3,70 |
| **Carraghénanes (AGI Matgel SP830)** | 0,08 | 0,08 | 0,08 | 0,08 | 0,08 | 0,08 |
| **TACKIDEX® B735** | 0,40 | 0,40 | / | / | / | / |
| **Inuline HP** | / | / | 0,40 | 0,40 | / | / |
| **Arôme vanille** | 0,60 | 0,60 | 0,60 | 0,60 | 0,60 | 0,60 |
| **Colorant** | 0,10 | 0,10 | 0,10 | 0,10 | 0,10 | 0,10 |
| **Dipotassium phosphate** | 0,20 | 0,20 | 0,20 | 0,20 | 0,20 | 0,20 |
| **Sel** | 0,05 | 0,05 | 0,05 | 0,05 | 0,05 | 0,05 |
| **Total** | 100 | 100 | 100 | 100 | 100 | 100 |

Le protocole de préparation des recettes est le suivant :

- Chauffer le lait à 50°C,
- Ajouter les poudres et laisser hydrater 1h à 50°C,
- Ajouter le reste des poudres à l'aide d'un agitateur mélangeur (de type TURBOSTEST de RAYNERI) et laisser sous agitation 5 minutes,
- Ajouter la crème à l'aide de l'homogénéisateur POLYTRON de type PT 45,
- Laisser sous agitation 5 minutes,
- Ajouter le colorant,
- Ajouter le di potassium phosphate (ajustement du pH),
- Vérifier le pH (pH 7),
- Chauffer à 55°C à l'aide du bain marie,
- Homogénéiser à 50 bar 1 étage avec un homogénéisateur (NIRO PANDA),
- Réaliser le traitement thermique 55 s à 135°C,
- Conditionner et stocker à 4°C.

*Analyses sensorielles*

Les résultats obtenus figurent dans le tableau suivant :

| | Essais réduite en matière grasse (1,5%) | | | | Témoins riches en matières grasses | |
|---|---|---|---|---|---|---|
| | selon l'invention | 1 | 2 | 3 | 4 | 5 |
| Texture courte | | + | | + | | + |
| Nappant en bouche | | - | | - | | - |
| Nappant à la cuillère | + | - | | - | + | - |
| Brillant | | | + | | | |
| Epais | + | | | | + | |
| Collant | + | | | | + | |
| Crémeux | + | | | | + | |
| Gras | + | | | | + | |

Ces résultats indiquent que ces recettes peuvent être classées en 3 familles :

- Famille 1 qui regroupe la recette selon l'invention et la recette 4 témoin ; la Recette selon l'invention (réduite de 50 % en matières grasses et combinant la dextrine de pois TACKIDEX B 735 + Amidon HP CR3010) présente en effet le même comportement que la Recette 4 témoin (100 % de matière grasse + Amidon HP seul) ;
- Famille 2 qui regroupe les recettes 1, 3 et 5 ; La Recette 1 combinant dextrine de pois + Amidon acétylé a le même comportement que la Recette 3 Inuline + Amidon acétylé et la Recette 5 témoin (100 % de matière grasse + Amidon acétylé seul) ;
- Famille 3 qui reprend la seule Recette 2 (Inuline + amidon HP).

En conclusion, la recette selon l'invention à 1,5 % de matière grasse, confère un effet sensoriel aussi gras que la recette témoin à 3% de matière grasse, avec un aspect nappant à la cuillère, et présente en outre un effet plus gras que la recette plus classique qui combine l'inuline avec l'amidon HP.
Une étude complémentaire a été réalisée en comparant le profil sensoriel aux mesures de fluidité/viscosité, de texture et de granulométrie.

*Analyses granulométriques*

La répartition granulométrique des crèmes desserts montre que la taille des granules diffère selon l'amidon : la taille des amidons acétylés/adipates est de l'ordre de 55 μm alors que celle des amidons hydroxypropylés est de 45 μm.
En comparaison aux résultats sensoriels, on constate que plus les granules d'amidon sont petits, plus la crème est perçue crémeuse.

*Analyses rhéologiques*

Lorsque l'inuline HP est utilisée, la viscosité des crèmes est équivalente à celle des crèmes à 1,5% de matière grasse.
Or, on constate que la viscosité des crèmes avec de la dextrine de pois (TACKIDEX®) est équivalente à celle d'une crème témoin à 3% de matière grasse.
En comparaison aux résultats sensoriels, le crémeux est corrélé à la boucle d'hystérésis (r = 0,85), la capacité de déstructuration d'un produit influe donc sur le crémeux.

| mesures à 20°C | hystérésis en Pa.s | |
|---|---|---|
| J+3 | Recette 4 | Recette 5 |

(suite)

| mesures à 20°C | hystérésis en Pa.s | |
|---|---|---|
| 3,7% d'amidon à 3%MG | 4610 | 370 |

Les surfaces d'hystérésis sont plus élevées avec les amidons hydroxypropylés qu'avec les amidons acétylés.

| mesures à 20°C | hystérésis |
|---|---|
| | Pa.S |
| Recette selon l'invention | 3590 |
| Recette 2 | 3560 |
| Recette témoin 5 | 4610 |

Une crème dessert contenant 3,7% d'amidon hydroxypropylé (CLEARAM® CR3010) et 1,5% de MG peut remplacer une crème dessert contenant 3.7% d'amidon acétylé (CLEARAM® CH3010) et 3% de MG afin de garder les mêmes ordres de grandeur de surface d'hystérésis.

D'autre part, ces valeurs montrent que la dextrine base pois (TACKIDEX® B 735) est équivalente à l'inuline HP, pour ce qui concerne l'hystérésis.

Cependant, l'essai avec inuline ressort moins crémeux et gras en sensoriel que celui incorporant ladite dextrine de pois.

**Exemple 2** : **Crèmes desserts au chocolat**

Deux recettes sont élaborées, selon le tableau suivant :

| % | Recette Témoin | Recette selon l'invention |
|---|---|---|
| lait écrémé (10% Matière Sèche) | 76,44 | 76,44 |
| Sucre | 10,00 | 10,00 |
| Crème 35 % (LES FAYES) | 7,23 | 2,23 |
| PROMILK® 852 A (protéines de lait concentrées) | 0,47 | 0,59 |
| CLEARAM® CR 3010 | 1,80 | 1,80 |
| TACKIDEX® B735 | 0 | 0,40 |
| Poudre de cacao (10 % de matière grasse) | 2,00 | 2,00 |
| Chocolat au lait (BARRY CALLEBAUT) | 2,00 | 2,00 |
| Carraghénanes (AGI Matgel SP830) | 0,06 | 0,06 |
| Eau | | 4,48 |
| Total | 100 | 100 |
| | | |
| Matière sèche | 26,23 | 24,69 |

Ingrédients :

| | Recette Témoin | Recette selon l'invention |
|---|---|---|
| Protéines | 3,72 | 3,72 |
| Hydrates de carbone | 17,35 | 17,52 |

(suite)

| | Recette Témoin | Recette selon l'invention |
|---|---|---|
| Matière grasse | 3,50 | 1,75 |
| Fibres | 0,63 | 0,66 |
| | | |
| Substitution de matière grasse | | 50% |

Le procédé de préparation des crèmes chocolat est le suivant :

- Chauffer le lait écrémé au bain marie à 50°C,
- Mélanger en un Mix A, le sucre, l'amidon, la poudre de cacao et les carraghénanes,
- Mélanger en un Mix B, le chocolat au lait et la crème ; chauffer à 50°C ; y ajouter les protéines de lait concentrées sous agitation dans un mélangeur (muni d'un mobile rotor-stator de marque SILVERSON® à 4700 rpm,
- Introduire le mix A dans le lait écrémé, hydrater 30 minutes à 50°C sous agitation dans un mélangeur (Silverson) à 4700 rpm,
- Ajouter le Mix B dans le Mix A (émulsionner à 10 000 rpm pendant 5 minutes).

Dans l'échangeur tubulaire à 20Uh:

- Homogénéiser à 100 bar / 1$^{er}$ étage à 63°C,
- Stériliser à 133°C pendant 55 secondes,
- Refroidir à 15°C,
- Stocker à + 4°C.

Ont été effectuées des analyses rhéologiques, sur rhéomètre Physica MCR301 (Anton Paar) dans les conditions suivantes :

- Mobile : CC27
- Temps d'équilibre : 300 secondes
- Déformation imposée : 0 - 350 $s^{-1}$ 180s et retour 350 - 0 $s^{-1}$ 180 s ;
- Température : 13°C.

Mesure réalisée à J+1.

| | Viscosité (Pa.s) | | | Surface d'hystérésis |
|---|---|---|---|---|
| | 5 s-1 | 40 s-1 | 350 s-1 | |
| Recette Témoin | 6 | 1,18 | 0,22 | 4330 |
| Recette selon l'invention | 4,8 | 1,03 | 0,22 | 2590 |

Mesures réalisées à J+14.

| | Viscosité (Pa.s) | | | Surface d'hystérésis |
|---|---|---|---|---|
| | 5 s-1 | 40 s-1 | 350 s-1 | |
| Recette Témoin | 7,15 | 1,41 | 0,25 | 5010 |
| Recette selon l'invention | 5,5 | 1,1 | 0,21 | 3170 |

Mesures réalisées à J+21.

| | Viscosité (Pa.s) | | | Surface d'hystérésis |
|---|---|---|---|---|
| | 5 s-1 | 40 s-1 | 350 s-1 | |
| Recette Témoin | 8,2 | 1,4 | 0,24 | 4890 |
| Recette selon l'invention | 5,8 | 1,1 | 0,2 | 3220 |

Ces essais montrent que la Recette selon l'invention est acceptable, même si moins visqueuse que la recette Témoin.
Quant à la perception du gras et du chocolat, elle est la même sur toutes les crèmes desserts. Cependant, les différences perçues portent sur la texture.
La crème dessert selon l'invention est plus nappante à la cuillère.
La répétabilité intra-séance sur la texture a pu être vérifiée par la présentation en doublon de la crème avec la recette selon l'invention, proches sur la première dimension qui est corrélée aux descripteurs d'intérêt.
D'autres essais ont été menés en augmentant, pour cette application, la teneur en amidon HP, à 2,3 % au lieu de 1,8 %, en maintenant la teneur en dextrine de pois à 0,4 %.
Les résultats obtenus montrent que la recette est plus visqueuse que le contrôle.
La perception du chocolat, d'une texture à la fois crémeuse et granuleuse, est également la même pour toutes les crèmes desserts.
Le témoin et la recette selon l'invention restent les échantillons les plus texturés, à savoir nappant et épais en bouche, avec une texture cuillère courte et épaisse.
En conclusion, une concentration intermédiaire entre 1,8 et 2,3 % permettrait d'atteindre facilement des viscosités équivalentes au contrôle.

MATERIELS ET METHODES

***Mesure de la granulométrie***

La mesure de la taille des granules d'amidon permet d'avoir une idée de l'état de cuisson (gonflement ou éclatement) du grain d'amidon. Ces mesures granulométriques ont été effectuées sur le granulomètre Mastersizer 3000 de chez MALVERN en voie liquide selon la théorie de Mie, le dispersant étant de l'eau.
Chaque mesure a été répétée trois fois.
Les diamètres en volume caractéristiques $Dv_{10}$, $Dv_{50}$ et $Dv_{90}$ et le mode en volume sont relevés pour chaque échantillon.
$Dv_{50}$ est le diamètre pour lequel 50 % des grains sont plus petits, il représente la taille médiane des grains.
$Dv_{10}$ et $Dv_{90}$ sont définis de la même façon et caractérisent la taille des fractions respectivement les plus fines et les plus grossières.
Le mode correspond quant à lui au diamètre moyen de la population la plus fréquentée

***Mesures de la rhéologie***

Les mesures de viscosité et de boucle d'hystérésis ou de thixotropie ont été faites sur le rhéomètre AR2000 de chez TA Instruments :

- température de 20°C,
- la mesure est faite en écoulement : la vitesse de cisaillement augmentant de façon logarithmique de 0.01 à 200 $s^{-1}$.

Cette mesure de thixotropie permet d'observer la perte de structure d'une crème dessert ou d'un yaourt et sa capacité ou non à se restructurer.
Les mesures de texture sont réalisées avec le TAXT PLUS de Stable Micro Systems ; la fermeté (force max), l'adhésion (aire sous la courbe négative) et la longueur du filet d'écoulement sont calculés quant à eux, à partir des mesures de pénétration faites au texturomètre avec une géométrie cône à 20°C : le mobile descend dans la crème dessert à 2 mm/s et la mesure est déclenchée dès que la force atteint 1g.
Lorsque le mobile remonte, la longueur du filet d'écoulement est mesurée.

***Mesure de la texture des crèmes***

La texture des crèmes desserts, et en particulier le crémeux, est une grandeur sensorielle complexe qui implique

une méthodologie basée sur la recherche et la quantification de descripteurs appropriés. Le choix s'est porté sur l'analyse descriptive quantitative - ou profil conventionnel - pour caractériser les crèmes desserts.

*Panel*

Le panel est constitué de 18 personnes.
Le panel est qualifié à la dégustation de produits formulés. Il a reçu une formation et un entrainement afin de vérifier ses performances en termes de :

- Capacité à discriminer les produits
- Consensus, utilisation correcte des descripteurs
- Répétabilité, capacité à repérer un doublon

*Conditions de dégustation*

- Au laboratoire d'analyse sensorielle : box individuels de dégustation, murs blancs, ambiance calme (pour faciliter la concentration)
- Lumière blanche (pour avoir exactement la même vision du produit)
- En fin de matinée ou d'après-midi (pour être au maximum des capacités sensorielles)
- Produits anonymés par un code à 3 chiffres (pour éviter que le code n'influence l'appréciation des produits)
- Produits présentés dans un ordre aléatoire (pour éviter les effets d'ordre et de rémanence)

*Exercice*

La méthode employée pour comparer les produits a été le Profil Flash (JM Sieffermann, 2000).
Les produits sont tous présentés simultanément. Il s'agit de comparer les produits entre eux en réalisant une succession de classements : les panélistes choisissent les descripteurs qui leur semblent les plus pertinents pour discriminer les produits entre eux et classent les produits selon ces descripteurs, il est possible que plusieurs produits soient regroupés sur un même rang.

Exemple :

Descripteur sensoriel : crémeux

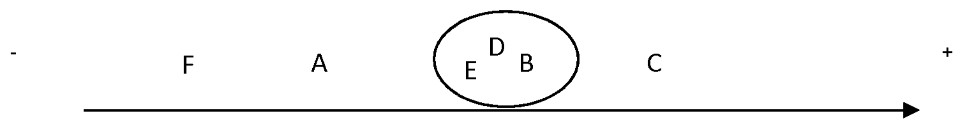


La liste de descripteurs présentée aux panélistes en fonction des crèmes préparées, détaillant définition, mode opératoire est exemplifiée ci-après.

*Traitement des données*

La méthode de traitement statistique adaptée à ce type de données est l'Analyse Factorielle Multiple (J. Pagès, 1994) sur les notes des produits. L'ensemble des descripteurs généré par un juge est un groupe de variable. Les graphiques présentés synthétisent l'ensemble des résultats fournis par cette méthode.
Les traitements statistiques ont été effectués avec le logiciel R version 2.14.1 (2011-12-22) (script d'exécution et données en annexe)

**Revendications**

1. Utilisation d'une composition contenant un amidon réticulé phosphate hydroxypropylé et une dextrine blanche pour la fabrication de produits laitiers frais à teneur réduite en matière grasse, **caractérisée en ce que** :

- l'amidon réticulé phosphate hydroxypropylé présente un degré de substitution compris entre 0,09 à 0,2, de préférence compris entre 0,09 et 0,14, plus préférentiellement encore d'environ 0,10 à 0,11 ;
- la dextrine blanche présente :

o un DE inférieur à 5, de préférence inférieur à 3, plus préférentiellement inférieur à 2,
o une viscosité à 40 % de matière sèche comprise entre 3600 et 6000 mPa.s, comme décrit dans la description partie « Mesure de la viscosité des dextrines blanches », et
o une teneur en solubles inférieure à 30 %, comme décrit dans la description partie « Mesure de la teneur en solubles des dextrines blanches»,
et **en ce que**

- l'amidon réticulé phosphate hydroxypropylé est incorporé dans le produit laitier frais à une teneur comprise entre 0,4 et 5 % en poids,
- la dextrine blanche est incorporée dans le produit laitier frais à une teneur comprise entre 0,1 et 2 % en poids.

**2.** Utilisation selon la revendication 1, **caractérisé en ce que** la teneur réduite en matière grasse est une réduction de 5 à 50 % en poids, de préférence de l'ordre de 50 % en poids de la teneur en matière grasse totale desdits produits laitiers frais.

**3.** Utilisation selon l'une ou l'autre des revendications 1 à 2, **caractérisée en ce que** l'origine de l'amidon pour l'amidon réticulé phosphate hydroxypropylé et pour la dextrine blanche est choisie parmi le maïs, la pomme de terre, la patate douce, le blé, le riz, le sagou, le tapioca, le maïs, le riz, le pois, le quinoa, le sorgho et est plus particulièrement :

- le maïs waxy, pour l'amidon réticulé phosphate hydroxypropylé , et/ou
- le pois, pour la dextrine blanche.

**4.** Utilisation selon l'une quelconque des revendications 1 à 3, **caractérisée en ce que** :

- l'amidon réticulé phosphate hydroxypropylé est incorporé dans le produit laitier frais à une teneur comprise entre 1,5 et 5 % en poids de préférence de l'ordre d'environ 3,7 % en poids,
- la dextrine blanche est incorporée dans le produit laitier frais à une teneur comprise entre 0,3 et 0,5 % en poids, de préférence de l'ordre d'environ 0,4 % en poids.

**5.** Utilisation selon l'une quelconque des revendications 1 à 4, dans laquelle les produits laitiers frais sont choisis parmi les crèmes desserts, les produits fermentés, les boissons laitières, le beurre, les crèmes glacées, et les sauces fromagères, et plus particulièrement les crèmes desserts.

**6.** Méthode de préparation d'un produit laitier frais à teneur réduite en matière grasse, **caractérisée en ce qu'**un amidon réticulé phosphate hydroxypropylé et une dextrine blanche sont ajoutés aux composants dudit produit laitier frais et **en ce que** :

- l'amidon réticulé phosphate hydroxypropylé présente un degré de substitution compris entre 0,09 à 0,2, de préférence compris entre 0,09 et 0,14, plus préférentiellement encore d'environ 0,10 à 0,11 ;
- la dextrine blanche présente :

o un DE inférieur à 5, de préférence inférieur à 3, plus préférentiellement inférieur à 2,
o une viscosité à 40 % de matière sèche comprise entre 3600 et 6000 mPa.s, comme décrit dans la description partie « Mesure de la viscosité des dextrines blanches », et
o une teneur en solubles inférieure à 30 %, comme décrit dans la description partie « Mesure de la teneur en solubles des dextrines blanches»,

et **en ce que**

- l'amidon réticulé phosphate hydroxypropylé est incorporé dans le produit laitier frais à une teneur comprise entre 0,4 et 5 % en poids,
- la dextrine blanche est incorporée dans le produit laitier frais à une teneur comprise entre 0,1 et 2 % en poids.

7. Méthode selon la revendication 6, **caractérisée en ce que** la teneur réduite en matière grasse est une réduction de 5 à 50 % en poids, de préférence de l'ordre de 50 % en poids de la teneur en matière grasse totale dudit produit laitier frais.

8. Méthode selon la revendication 6 ou 7, **caractérisée en ce que** l'origine de l'amidon pour l'amidon réticulé phosphate hydroxypropylé et pour la dextrine blanche est choisie parmi le maïs, la pomme de terre, la patate douce, le blé, le riz, le sagou, le tapioca, le maïs, le riz, le pois, le quinoa, le sorgho et est plus particulièrement :

   - le maïs waxy, pour l'amidon réticulé phosphate hydroxypropylé, et/ou
   - le pois, pour la dextrine blanche.

9. Méthode selon l'une des revendications 6 à 8, **caractérisée en ce que**

   • l'amidon réticulé phosphate hydroxypropylé est incorporé dans le produit laitier frais à une teneur comprise entre 1,5 et 5 % en poids, de préférence de l'ordre d'environ 3,7 % en poids,
   • la dextrine blanche est incorporée dans le produit laitier frais à une teneur comprise entre 0,3 et 0,5 % en poids, de préférence de l'ordre d'environ 0,4 % en poids.

10. Méthode selon l'une quelconque des revendications 6-9, **caractérisée en ce que** le produit laitier frais est choisi parmi les crèmes desserts, les produits fermentés, les boissons laitières, le beurre, les crèmes glacées, et les sauces fromagères, et plus particulièrement les crèmes desserts.

**Patentansprüche**

1. Verwendung einer Zusammensetzung, die eine vernetzte Hydroxypropylphosphatstärke und ein weißes Dextrin enthält, für die Herstellung von Frischmilchprodukten mit reduziertem Fettgehalt, **dadurch gekennzeichnet, dass**:

   - die vernetzte Hydroxypropylphosphatstärke einen Substitutionsgrad von 0,09 bis 0,2, bevorzugt von 0,09 bis 0,14, stärker bevorzugt von etwa 0,10 bis 0,11 aufweist,
   - das weiße Dextrin aufweist:

      ◦ einen DE-Wert kleiner als 5, bevorzugt kleiner als 3, stärker bevorzugt kleiner als 2,
      ◦ eine Viskosität bei 40% Trockenmasse zwischen 3600 und 6000 mPa.s, wie in der Beschreibung, Teil "Messung der Viskosität von weißen Dextrinen" beschrieben, und
      ◦ einen Gehalt an löslichen Bestandteilen von weniger als 30%, wie in der Beschreibung, Teil "Messung des Gehalts an löslichen Bestandteilen weißer Dextrine" beschrieben, und dadurch, dass

   - die vernetzte Hydroxypropylphosphatstärke in das Frischmilchprodukt mit einem Gehalt zwischen 0,4 und 5 Gew.-% eingearbeitet wird,
   - das weiße Dextrin mit einem Gehalt zwischen 0,1 und 2 Gew.-% in das Frischmilchprodukt eingearbeitet wird.

2. Verwendung nach Anspruch 1, **dadurch gekennzeichnet, dass** der reduzierte Fettgehalt eine Reduktion von 5 bis 50 Gew.-%, bevorzugt in der Größenordnung von 50 Gew.-%, des Gesamtfettgehalts der Frischmilchprodukte ist.

3. Verwendung nach einem der Ansprüche 1 bis 2, **dadurch gekennzeichnet, dass** der Ursprung der Stärke für die vernetzte Hydroxypropylphosphatstärke und für das weiße Dextrin aus Mais, Kartoffel, Süßkartoffel, Weizen, Reis, Sago, Tapioka, Mais, Reis, Erbsen, Quinoa, Sorghum gewählt wird und insbesondere ist:

   - Waxy-Mais für die vernetzte Hydroxypropylphosphatstärke und/oder
   - Erbse für das weiße Dextrin.

4. Verwendung nach einem der Ansprüche 1 bis 3, **dadurch gekennzeichnet, dass**:

   - die vernetzte Hydroxypropylphosphatstärke in das Frischmilchprodukt mit einem Gehalt zwischen 1,5 und 5 Gew.-%, bevorzugt in der Größenordnung von etwa 3,7 Gew.-%, eingearbeitet wird,
   - das weiße Dextrin in das Frischmilchprodukt mit einem Gehalt zwischen 0,3 und 0,5 Gew.-%, bevorzugt in der Größenordnung von etwa 0,4 Gew.-%, eingearbeitet wird.

5. Verwendung nach einem der Ansprüche 1 bis 4, wobei die Frischmilchprodukte aus Dessertcremes, fermentierten Produkten, Milchgetränken, Butter, Eiscreme und Käsesaucen, und insbesondere Dessertcremes, gewählt sind.

6. Verfahren zur Herstellung eines Frischmilchprodukts mit reduziertem Fettgehalt, **dadurch gekennzeichnet, dass** eine vernetzte Hydroxypropylphosphatstärke und ein weißes Dextrin zu den Komponenten des Frischmilchprodukts hinzugefügt werden und dass:

   - die vernetzte Hydroxypropylphosphatstärke einen Substitutionsgrad von 0,09 bis 0,2, bevorzugt von 0,09 bis 0,14, stärker bevorzugt von etwa 0,10 bis 0,11, aufweist,
   - das weiße Dextrin aufweist:

     ◦ einen DE-Wert von weniger als 5, bevorzugt weniger als 3, stärker bevorzugt weniger als 2,
     ◦ eine Viskosität bei 40% Trockenmasse zwischen 3600 und 6000 mPa.s, wie in der Beschreibung, Teil "Messung der Viskosität von weißen Dextrinen" beschrieben, und
     ◦ einen Gehalt an löslichen Bestandteilen von weniger als 30%, wie in der Beschreibung, Teil "Messung des Gehalts an löslichen Bestandteilen weißer Dextrine" beschrieben, und dadurch, dass

   - die vernetzte Hydroxypropylphosphatstärke in das Frischmilchprodukt mit einem Gehalt zwischen 0,4 und 5 Gew.-% eingearbeitet wird,
   - das weiße Dextrin in das Frischmilchprodukt mit einem Gehalt zwischen 0,1 und 2 Gew.-% eingearbeitet wird.

7. Verfahren nach Anspruch 6, **dadurch gekennzeichnet, dass** der reduzierte Fettgehalt eine Reduktion von 5 bis 50 Gew.-%, bevorzugt in der Größenordnung von 50 Gew.-%, des Gesamtfettgehalts des genannten Frischmilchprodukts ist.

8. Verfahren nach Anspruch 6 oder 7, **dadurch gekennzeichnet, dass** der Ursprung der Stärke für die vernetzte Hydroxypropylphosphatstärke und für das weiße Dextrin aus Mais, Kartoffel, Süßkartoffel, Weizen, Reis, Sago, Tapioka, Mais, Reis, Erbsen, Quinoa, Sorghum gewählt wird und insbesondere ist:

   - Waxy-Mais für die vernetzte Hydroxypropylphosphatstärke und/oder
   - Erbse für das weiße Dextrin.

9. Verfahren nach einem der Ansprüche 6 bis 8, **dadurch gekennzeichnet, dass**

   - die vernetzte Phosphat-Hydroxypropylstärke mit einem Gehalt von 1,5 bis 5 Gew.-%, bevorzugt etwa 3,7 Gew.-%, in das Frischmilchprodukt eingearbeitet wird,
   - das weiße Dextrin in das Frischmilchprodukt mit einem Gehalt von 0,3 bis 0,5 Gew.-%, bevorzugt etwa 0,4 Gew.-%, eingearbeitet wird.

10. Verfahren nach einem der Ansprüche 6-9, **dadurch gekennzeichnet, dass** das Frischmilchprodukt aus Dessertcremes, fermentierten Produkten, Milchgetränken, Butter, Eiscreme und Käsesaucen und insbesondere Dessertcremes gewählt ist.

## Claims

1. The use of a composition containing a crosslinked hydroxypropyl starch phosphate and a white dextrin for the production of fresh milk products with a reduced fat content, **characterized in that**:

   - the crosslinked hydroxypropyl starch phosphate has a degree of substitution of between 0.09 and 0.2, preferably of between 0.09 and 0.14, even more preferentially approximately 0.10 to 0.11;
   - the white dextrin has:

     o a DE of less than 5, preferably less than 3, more preferentially less than 2,
     o a viscosity at 40% solids of between 3600 and 6000 mPa.s, and
     o a solubles content of less than 30%, as described in the portion "Measurement of the solubles content of the white dextrins" of the description, wherein

- the crosslinked hydroxypropyl starch phosphate is incorporated into the milk product in a content comprised between 0.4% and 5%,
- the white dextrin is incorporated into the milk product in a content comprises between 0.1% and 2% by weight.

2. The use as claimed in claim 1, **characterized in that** the reduced fat content is a reduction of 5% to 50% by weight, preferably of about 50% by weight of the total fat content of said fresh milk products.

3. The use as claimed in either of claims 1 and 2, **characterized in that** the origin of the starch for the crosslinked hydroxypropyl starch phosphate and the white dextrin is chosen from com, potato, sweet potato, wheat, rice, sago, tapioca, com, rice, pea, quinoa and sorghum, and is more particularly:

   - waxy com, for the crosslinked hydroxypropyl starch phosphate, and/or
   - pea, for the white dextrin.

4. The use as claimed in any one of claims 1 to 3, **characterized in that**:

   - the crosslinked hydroxypropyl starch phosphate is incorporated into the fresh milk product in a content comprised between 1.5% and 5% by weight, preferentially of about approximately 3.7% by weight,
   - the white dextrin is incorporated into the fresh milk product in a content comprised between 0.3% and 0.5% by weight, preferentially of about approximately 0.4% by weight.

5. The use as claimed in any one of claims 1 to 4, wherein the fresh milk products are chosen from dessert creams, fermented products, milk and vegetable drinks, butter, margarine, ice creams, and cheese sauces, and more particularly dessert creams.

6. A method for preparing a fresh milk product with a reduced fat content, **characterized in that** a crosslinked hydroxypropyl starch phosphate and a white dextrin are added to the components of said fresh milk product and **in that**:

   - the crosslinked hydroxypropyl starch phosphate has a degree of substitution of between 0.09 and 0.2, preferably of between 0.09 and 0.14, even more preferentially approximately 0.10 to 0.11;
   - the white dextrin has:

      o a DE of less than 5, preferably less than 3, more preferentially less than 2,
      o a viscosity at 40% solids of between 3600 and 6000 mPa.s, and
      o a solubles content of less than 30%, as described in the portion "Measurement of the solubles content of the white dextrins" of the description, wherein

         - the crosslinked hydroxypropyl starch phosphate is incorporated into the milk product in a content comprised between 0.4% and 5%,
         - the white dextrin is incorporated into the milk product in a content comprised between 0.1% and 2% by weight.

7. The method as claimed in claim 6, **characterized in that** the reduced fat content is a reduction of 5% to 50% by weight, preferably of about 50% by weight of the total fat content of said fresh milk product.

8. The method as claimed in claim 6 or 7, **characterized in that** the origin of the starch for the crosslinked hydroxypropyl starch phosphate and the white dextrin is chosen from com, potato, sweet potato, wheat, rice, sago, tapioca, com, rice, pea, quinoa and sorghum, and is more particularly:

   - waxy com, for the crosslinked hydroxypropyl starch phosphate, and/or
   - pea, for the white dextrin.

9. The method as claimed in one of claims 6 to 8, **characterized in that**

   • the crosslinked hydroxypropyl starch phosphate is incorporated into the fresh milk product in a content comprised between 1.5% and 5% by weight, preferentially of about approximately 3.7% by weight,

- the white dextrin is incorporated into the fresh milk product in a content comprised between 0.3% and 0.5% by weight, preferentially of about approximately 0.4% by weight.

**10.** The method as claimed in any one of claims 6-9, **characterized in that** the fresh milk product is chosen from dessert creams, fermented products, milk and vegetable drinks, butter, margarine, ice creams, and cheese sauces, and more particularly dessert creams.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4510166 A
- US 5512311 A
- US 3962465 A
- US 3986890 A
- US 4536408 A
- US 5110612 A
- US 3369910 A
- US 4981709 A


### Littérature non-brevet citée dans la description


- *CHEMICAL ABSTRACTS*, 53124-00-8
- *CHEMICAL ABSTRACTS*, 9004-53-9
- **JM SIEFFERMANN**. *Profil Flash*, 2000
- **J. PAGÈS**. *l'Analyse Factorielle Multiple*, 1994